# EUROPÄISCHE PATENTANMELDUNG

(11) **EP 1 388 702 A1**
(43) Veröffentlichungstag der Anmeldung: **11.02.2004**
(21) Anmeldenummer: 03014980.1
(22) Anmeldetag: 02.07.2003
(51) Int. Cl.: F16L 41/16, F16L 55/10, F27D 9/00

(54) **Armatur**

(30) Priorität: 07.08.2002 DE 10236118
(71) Anmelder: Georgsmarienhütte GmbH, 49124 Georgsmarienhütte (DE)
(72) Erfinder: Martin, Werner, 49170 Hagen a TW (DE)
(74) Vertreter: Röther, Peter, Dipl.-Phys.

(57) **Zusammenfassung**

1. Die Erfindung betrifft eine Armatur zum Einsatz insbesondere in Kühlkreislaufsystemen von Elektroöfen zur Stahlherstellung mit einem den Rohr-querschnitt im Kühlkreislauf verringernden Element,
   die gekennzeichnet ist durch
   eine an das jeweilige Rohr (3) anzuschweißende, eine seitlich in das Rohr (2) eingebrachte Öffnung umgebende Muffe (2), deren Außendurchmesser ≤ dem Rohraußendurchmesser ist und in deren vom Rohr (3) abgewandten Ende eine Verschlußschraube (7,1') angeordnet ist, wobei das Element (4,4') in der Muffe (2) in Muffenlängsachsenrichtung durch die Öffnung hindurch verschiebbar und feststellbar ist.

## Beschreibung

Die Erfindung betrifft eine Armatur zum Einsatz insbesondere in Kühlkreislaufsystemen von Elektroöfen zur Stahlherstellung mit einem den Rohrquerschnitt im Kühlkreislauf verringernden Element.

Wie die Formulierung "insbesondere" schon andeutet, ist der Einsatz der erfindungsgemäßen Armatur nicht auf Elektroöfen zur Stahlherstellung beschränkt, sondern kann allgemein im Rohrleitungs-, Anlagen- und Kesselbau eingesetzt werden. Die Erfindung wird allerdings am Beispiel eines Lichtbogenofens zur Stahlerzeugung beschrieben.

An derartigen modernen Lichtbogenöfen zur Stahlerzeugung sind u.a. der Deckel, Teile der Wand und der Abgaskrümmer wassergekühlt ausgeführt. Weit verbreitet sind dabei wasserdurchströmte Rohr-An-Rohr-Konstruktionen, die aus einer größeren Anzahl parallel geschalteter Kühlkreisläufe (bis zu 50) bestehen, die jedoch alle durch einen einzigen gemeinsamen Vorlauf gespeist werden.

Sowohl hinsichtlich ihres Durchströmungswiderstandes als auch hinsichtlich der Beaufschlagung mit Wärme können die einzelnen Kreisläufe stark voneinander abweichen. Somit ist es notwendig, die Wassermengenverteilung durch ein Drosselorgan (im folgenden Armatur genannt) für jeden Kreislauf exakt einstellen zu können. Stärker mit Wärme beaufschlagte Zweige und Zweige mit hohem Durchströmungswiderstand werden dabei weniger stark gedrosselt als gering belastete Kreise mit niedrigem Widerstand. Zur Regulierung können aus Platzgründen und aufgrund der rauhen Umgebungsbedingungen keine handelsüblichen Armaturen eingebaut werden.

Zu beachten ist darüber hinaus, daß sich die Durchsätze gegenseitig beeinflussen, d.h. die Drosselung des einen Zweiges zieht eine Durchsatzerhöhung der anderen nach sich. Deshalb ist das korrekte Einstellen des Mengendurchsatzes oft ein iterativer Prozess.

Bisher wurden fest eingeschweißte Blenden oder zwischen Flanschen eingeschraubte Drosselscheiben zur Mengenregelung eingesetzt. Das konnte jedoch nur an wenigen hierfür geeigneten Stellen geschehen, auf jeden Fall nicht dort, wo die Rohre eng beieinander liegen. Durch die gegenseitige Beeinflussung der Kreisläufe ist eine genaue Vorausberechnung der Festblendengröße oft schwierig. Ein schnelles Korrigieren vor allem während des Betriebes ist nicht möglich. Der oben beschriebene iterative Prozess wird damit sehr zeit- und kostenaufwendig. Behelfsmäßig werden deshalb oft die zur vollständigen Absperrung eines Kreislaufes zusätzlich vorhandenen Absperrorgane für eine Mengenregelung "missbraucht". Eine derartige Regelung liefert jedoch keine stabilen und reproduzierbaren Durchsätze, da die Kennlinie eines Absperrorgans (Schieber, Klappe) sehr steil verläuft, d.h. kleine Änderungen der Einstellung ziehen große Durchsatzänderungen nach sich.

Der Erfindung liegt daher die Aufgabe zugrunde, eine Armatur der eingangs genannten Art so auszubilden, daß zum einen der Einbauort willkürlich gewählt werden kann und zum anderen eine einfache Regelung auch während des Betriebes möglich wird.

Die Erfindung löst diese Aufgabe gemäß dem kennzeichnenden Teil des Anspruchs 1 durch eine an das jeweilige Rohr anzuschweißende, eine seitlich in das Rohr eingebrachte Öffnung umgebende Muffe, deren Außendurchmesser ≤ dem Rohraußendurchmesser ist und in deren vom Rohr abgewandten Ende eine Verschlußschraube angeordnet ist, wobei ein Element in der Muffe in Muffenlängsachsenrichtung durch die Öffnung hindurch verschiebbar und feststellbar ist.

Dadurch, daß die seitlichen Abmessungen der Armatur nicht größer sind als der Durchmesser des Rohres, an dem die Armatur angebracht wird, kann der Einbauort der Armatur willkürlich gewählt werden, also entweder dort wo Platz ist, oder aber dort wo durch eine Regelung direkt auf die gewünschten Bedingungen Einfluß genommen werden soll.

Der Einbau in vorhandene Rohrsysteme ist möglich, auch in Rohr-An-Rohrsystemen mit beengten Platzverhältnissen, was mit anderen Armaturen nicht möglich ist.

Die Armatur ist einfach, teilweise aus Normteilen aufgebaut und somit preisgünstig.

Der Einbau der Armatur gestaltet sich einfach, indem an der gewünschten Stelle im Rohr zunächst eine Öffnung erstellt wird, um die herum die Muffe angeschweißt wird. Durch die Öffnung hindurch reicht dann das den Rohrquerschnitt verringernde Element, das in erster Alternative als Drossel wirken soll.

Gemäß dem Vorschlag des Anspruchs 2 ist die Muffe zylinderförmig ausgebildet ist, weist an ihrem dem Rohr abgewandten Ende ein Innengewinde auf, in das die Verschlußschraube mit entsprechendem Außengewinde einschraubbar ist, wobei zwischen dem Muffenzylinder und der Verschlußschraube eine Dichtung (Kupferring) vorgesehen ist, wobei in der Verschlußschraube eine diese vollständig durchsetzende Bohrung vorgesehen ist, durch die ein Getriebe für die Verschiebebewegung des Elements hindurchgeführt wird.

Durch das Getriebe kann das den Rohrquerschnitt verringernde Element (Drosselorgan) in das Rohr eingefahren werden, wodurch auch im Betrieb eine exakte Einstellung des Durchflusses gewährleistet wird.

Gemäß Anspruch 3 wird als Getriebe vorzugsweise eine mit dem Element verbundene Spindel verwendet, deren Spindelmutter durch die Verschlußschraube gebildet ist, und zwischen Spindel und Spindelmutter eine Dichtung vorgesehen ist. Diese Dichtung kann aus einem Dichtband oder etwas Hanf bestehen, das um die Spindel gewickelt ist. Es kann sich auch um eine Teflonscheibe handeln.

Nachdem die gewünschte Einstellung gefunden ist, wird, wie der Anspruch 4 vorschlägt, zur Fixierung der Einstellung (zum Feststellen des Elements) auf der Spindel eine gegen die äußere Stirnfläche der Verschlußschraube anlegbare Kontermutter angezogen, wodurch das Dichtband bzw. der Hanf in den Gewindespalt gedrückt wird, wodurch das Rohrsystem nach außen dicht wird.

Dadurch, daß bei der Erfindung das den Querschnitt verringernde Element seitlich in den Rohrquerschnitt eintaucht, ergibt sich eine flachere Kennlinie und somit eine exaktere Regelung.

Vorteilhafterweise ist das den Querschnitt verringernde Element gemäß Anspruch 5 aus einem zylindrischen Bereich mit einem daran in Richtung Rohrinneres anschließenden integralen halbkugelförmigen Bereich gebildet. Diese Geometrie optimiert das Regelverhalten der erfindungsgemäßen Armatur.

Die Geometrie der erfindungsgemäßen Armatur muß jedoch nicht unbedingt rotationssymmetrisch sein. Vorstellbar ist auch, daß das den Querschnitt verringernde Element ein flacher Schieber ist, der in einer entsprechend geformten Muffe geführt ist.

Die Hauptvorteile der erfindungsgemäßen Armatur sind neben den oben bereits aufgeführten darin zu sehen, daß eine Armatur für einen ganzen Bereich von Rohrdurchmessern ausreicht. Ein unbeabsichtigtes Verstellen der Durchflußmenge ist ausgeschlossen. Ein exaktes Berechnen der Durchflußmengen ist nicht nötig, da die Kreisläufe genau nach Bedarf eingestellt werden können und sich eine erhebliche Zeitersparnis beim Verstellen gegenüber den obengenannten Festblenden ergibt. Die erfindungsgemäße Armatur ist kostengünstiger gegenüber Drosselscheiben, da keine Flansche, Verschraubungen etc. erforderlich sind.

Da die Kreisläufe genau nach Bedarf eingestellt werden können, sind insgesamt geringere Überkapazität/Regelreserven im Gesamtsystem erforderlich.

Für die Regelung neutraler Medien kann die Armatur eine einfache Stahlausführung sein.

Für aggressive Medien bietet sich eine gekapselte Ausführung oder eine Ausführung in Form einer Stopfbuchse an. Das gilt auch für die Regelung von Dampf und ähnlichem.

Durch einfachen Austausch des den Rohrquerschnitt verringernden Elements gemäß Anspruch 9, wobei das Element mit der Verschlußschraube eine integrale Einheit bildet und einen zunächst in Längsrichtung des Elements verlaufenden Kanal und im ins Rohr eintauchenden Bereich einen von diesem Kanal im rechten Winkel abgehenden ins Rohr mündenden Kanal aufweist, wobei in der freien Stirnfläche der Verschlußschraube ein Anschlußstutzen für einen gas- bzw. flüssigkeitsführenden Schlauch vorgesehen ist, kann die erfindungsgemäße Armatur für einen weiteren Zweck eingesetzt werden.

Von Zeit zu Zeit ist bei einer Anlage, wie sie oben beschrieben wurde, ein Spülvorgang - beispielsweise aus Gründen des Korrosionsschutzes - notwendig. Zu Schweißarbeiten oder aus Gründen des Frostschutzes ist es ferner regelmäßig notwendig, einzelne oder alle Kreisläufe mittels Ausblasen mit Druckluft wasserfrei zu machen. Durch die erfindungsgemäße Alternative ist es so möglich, eine Leitung auf einfache Art und Weise an das modifizierte Element anzuschließen, wodurch ein gerichtetes Einleiten des Mediums (z.B. Korrosionsschutz oder Druckluft) in die Rohrleitung möglich ist.

Die Erfindung wird im folgenden anhand von Zeichnungen dargestellt und erläutert.

Es zeigen:
- Fig. 1:: erfindungsgemäße Armatur teilweise im Querschnitt,
- Fig. 2a:: alternative Ausführungsform der Armatur im Querschnitt,
- Fig. 2b:: Armatur gemäß Fig. 2a in abgebrochener Darstellung und um 90° gedreht.

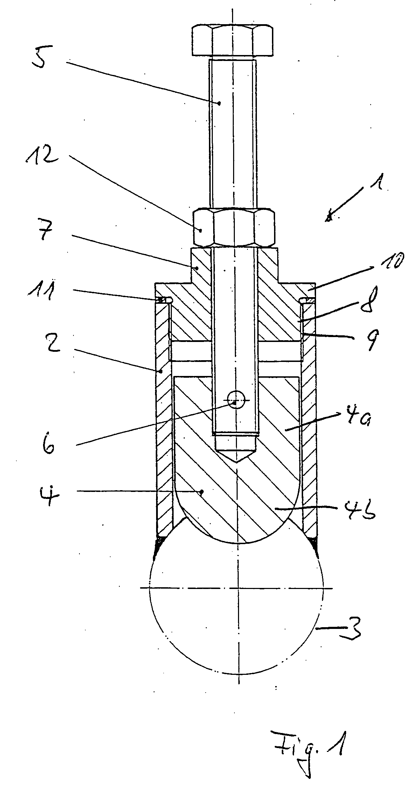

In der Fig. 1 ist eine als Drossel arbeitende Armatur dargestellt und allgemein mit dem Bezugszeichen 1 versehen. Die Armatur 1 besteht aus einer zylinderförmigen Muffe, die an ein Rohr 3 angeschweißt ist, in das zuvor eine dem Innendurchmesser der Muffe 2 entsprechende Öffnung eingebracht worden ist.

In der Muffe ist ein den Rohrquerschnitt verringerndes Element 4 durch die Öffnung im Rohr 3 verschiebbar gelagert. Das Element besteht.aus einem zylinderförmigen Bereich 4a und einem halbkugelförmigen Bereich 4b. Zur Verschiebung des Elements 4 dient eine Spindel 5, die mittels eines Spannstiftes 6 mit dem Element 4 verbunden ist. Als Spindelmutter für die Spindel 5 dient eine Verschlußschraube 7, die mit ihrem Außengewinde 8 in das Innengewinde 9 der Muffe 2 eingeschraubt ist. Die mit dem Muffenumfang fluchtende Schulter 10 der Verschlußschraube 7 ist mittels eines Kupferrings 11 gegen die Muffe 2 abgedichtet.

Auf der Spindel 5 befindet sich eine Kontermutter 12, die nach Einstellung des Elements 4 durch die Spindel 5 angezogen wird, um die Einstellung zu fixieren. Beim Anziehen der Kontermutter 12 drückt sich nicht dargestelltes Dichtmaterial (Dichtband, Hanf, Teflonscheibe) in die Gewindegänge der Spindel 5 bzw. Verschlußschraube 7. Hierdurch wird die Armatur nach außen abgedichtet.

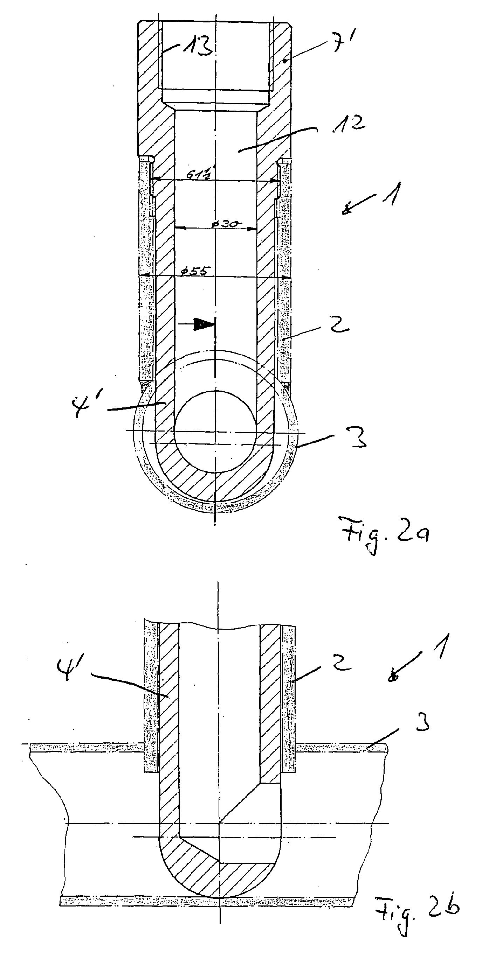

In der Fig. 2a und Fig. 2b ist eine alternative Ausführungsform der Armatur 1 dargestellt. Mit dem Bezugszeichen 2 ist auch hier die Muffe mit dem Bezugszeichen 3 das Rohr bezeichnet. Das Element 4' ist in diesem Fall einteilig mit der Verschlußschraube 7' ausgebildet und weist einen von der oberen Stirnfläche der Verschlußschraube 7' führenden Kanal 13,14 auf, der zunächst in Längsrichtung des Elements 4 verläuft und im unteren Bereich, der sich innerhalb des Rohres 3 befindet, im rechten Winkel in Rohrlängsrichtung weist.

In der Verschlußschraube 7' befindet sich ein Anschlußgewinde 15, in das ein fluidführender Schlauch oder ein fluidführendes Rohr eingeschraubt werden kann. Mittels dieser Armatur lässt sich in das Rohr 3 beispielsweise Druckluft oder Spülflüssigkeit einbringen.

Zu Schweißarbeiten oder aus Gründen des Frostschutzes müssen regelmäßig die Rohre der Kreisläufe mit Druckluft ausgeblasen und wasserfrei gemacht werden.

Nach diesen Arbeiten kann durch Wechseln des Elements 4' wieder eine Drosselarmatur installiert werden.

## Patentansprüche

1. Armatur zum Einsatz insbesondere in Kühlkreislaufsystemen von Elektroöfen zur Stahlherstellung mit einem den Rohrquerschnitt im Kühlkreislauf verringernden Element, **gekennzeichnet durch**
eine an das jeweilige Rohr (3) anzuschweißende, eine seitlich in das Rohr (2) eingebrachte Öffnung umgebende Muffe (2), deren Außendurchmesser ≤ dem Rohraußendurchmesser ist und in deren vom Rohr (3) abgewandten Ende eine Verschlußschraube (7,7') angeordnet ist, wobei das Element (4,4') in der Muffe (2) in Muffenlängsachsenrichtung **durch** die Öffnung hindurch verschiebbar und feststellbar ist.

2. Armatur nach Anspruch 1,
**dadurch gekennzeichnet,**
**daß** die Muffe (2) zylinderförmig ausgebildet ist, an ihrem dem Rohr (3) abgewandten Ende ein Innengewinde (9) aufweist, in das die Verschlußschraube (7) mit entsprechendem Außengewinde (8) einschraubbar ist, wobei zwischen dem Muffenzylinder und der Verschlußschraube (7) eine Dichtung (11) vorgesehen ist, wobei in der Verschlußschraube (7) eine diese vollständig durchsetzende Bohrung vorgesehen ist, durch die ein Getriebe (5) für die Verschiebebewegung des Elements (4) hindurchgeführt wird.

3. Armatur nach Anspruch 1 oder 2,
**dadurch gekennzeichnet,**
**daß** das Getriebe eine mit dem Element (4) verbundene Spindel (5) ist, deren Spindelmutter durch die Verschlußschraube (7) gebildet ist und zwischen Spindel (5) und Spindelmutter (7) eine Dichtung vorgesehen ist.

4. Armatur nach Anspruch 3,
**dadurch gekennzeichnet,**
**daß** die Dichtung ein Teflonring ist.

5. Armatur nach Anspruch 3,
**dadurch gekennzeichnet,**
**daß** die Dichtung aus einem Dichtband, oder Hanf besteht.

6. Armatur nach einenm der Ansprüche 3 bis 5,
**dadurch gekennzeichnet,**
**daß** zum Feststellen des Elements (4) auf der Spindel (5) eine gegen die äußere Stirnfläche der Verschlußschraube (7) anlegbare Kontermutter (12) vorgesehen ist.

7. Armatur nach einem der Ansprüche 1 bis 6,
**dadurch gekennzeichnet,**
**daß** das Element (4) einen zylindrischen Bereich (4a) mit einem daran in Richtung Rohrinneres anschließenden integralen halbkugelförmigen Bereich (14b) aufweist.

8. Armatur nach einem der Ansprüche 1 bis 7,
**dadurch gekennzeichnet,**
**daß** die Muffe (2) im Querschnitt rechteckförmig ausgebildet ist und das Element (7) ein darin verschiebbarer flacher Schieber ist.

9. Armatur nach einem der Ansprüche 1 bis 7,
**dadurch gekennzeichnet,**
**daß** das Element (4') mit der Verschlußschraube (7') eine integrale Einheit bildet und einen zunächst in Längsrichtung des Elements (4') verlaufenden Kanal (13) und im ins Rohr (3) eintauchenden Bereich einen von diesem Kanal (13) im rechten Winkel abgehenden ins Rohr (3) mündenden Kanal (14) aufweist, wobei in der freien Stirnfläche der Verschlußschraube (7') ein Anschlußstutzen (15) für einen gas- bzw. flüssigkeitsführenden Schlauch vorgesehen ist.
